# EUROPÄISCHE PATENTSCHRIFT

(11) **EP 0 817 932 B1**
(45) Veröffentlichungstag und Bekanntmachung des Hinweises auf die Patenterteilung: **19.08.1998**
(21) Anmeldenummer: 96907308.9
(22) Anmeldetag: 23.03.1996
(51) Int. Cl.: F16K 35/02

(54) **GRIFF FÜR SANITÄRE WASSERARMATUREN**
HANDLE FOR SANITARY WATER FITTINGS
POIGNEE POUR ROBINETTERIE D'EAU SANITAIRE

(30) Priorität: 27.03.1995 DE 19510477
(43) Veröffentlichungstag der Anmeldung: 14.01.1998
(73) Patentinhaber: IDEAL-STANDARD GMBH, 53121 Bonn (DE)
(72) Erfinder: EMS, Josef, D-54516 Wittlich (DE); PLASSMANN, Werner, D-54472 Brauneberg (DE)
(74) Vertreter: Müller, Karl-Ernst, Dr., Dipl.-Ing.
(86) Internationale Anmeldenummer: DE9600556
(87) Internationale Veröffentlichungsnummer: WO9630683

(56) Entgegenhaltungen:
- EP-A- 0 232 454
- DE-A- 4 308 762

## Beschreibung

Die Erfindung bezieht sich auf einen Griff für sanitäre Wasserarmaturen, wie Thermostatventil, Mischventil, Einzelabsperrventil oder dergleichen, in der Form von Aufputz- oder Unterputzarmaturen, wobei der Griff mit wenigstens einem Stellglied für die Temperatur- beziehungsweise Mengensteuerung versehen ist und zur Aufnahme einer in einer in der äußeren Mantelfläche des Griffes ausgebildeten Öffnung anzuordnenden Taste eingerichtet ist.

Bei zum Beispiel Einzel-Thermostatventilen werden üblicherweise zwei Griffe benötigt, nämlich ein Temperaturgriff und ein Mengen- und Absperrgriff. Der Temperaturgriff ist dabei mit einer üblicherweise in Rot ausgeführten Druck- oder Schiebetaste versehen, die mit einem Anschlag als Temperatursperre zwecks Verbrühschutz zusammenwirkt. Wird der Temperaturgriff bis zu diesem Anschlag gedreht, so hat das Mischwasser eine Temperatur von beispielsweise 40° Celsius; wird eine höhere Temperatur gewünscht, so muß die Druck- oder Schiebetaste gegen den Widerstand einer Feder bewußt betätigt werden, um den Temperaturgriff über den Anschlag hinaus drehen zu können. Wird anschließend der Temperaturgriff über den Anschlag wieder zurückgedreht, so drückt die Feder die Druck- oder Schiebetaste wieder in die Ausgangslage zurück, so daß die Temperatursperre wieder funktionsfähig ist. Derartige Druck- oder Schiebetasten finden in anderer farblicher Kennzeichnung auch zur differenzierten Mengensteuerung Anwendung.

Insoweit ist ein Griff mit den gattungsgemäßen Merkmalen in der EP 0 232 454 A1 beschrieben, bei welchem in der in der äußeren Mantelfläche des Griffes als durch Druck aufhebbarer Anschlag eine nach Art einer Wippe bewegliche Funktionstaste angeordnet ist, die gegen Federkraft relativ zu dem Griff beweglich ist, um den dadurch gebildeten Anschlag außer Kraft zu setzen und einer Weiterdrehung des Griffes zu ermöglichen.

Bei Griffen zur Absperrung und Mengensteuerung ohne besondere Funktionstasten der vorstehenden Art ist es weiterhin bekannt, feste und unbeweglich an dem Griff angeordnete Bedienungstasten vorzusehen, um die manuelle Handhabung des Griffes, insbesondere dessen Drehung, zu erleichtern.

Aus der unterschiedlichen Ausgestaltung der beiden vorbeschriebenen, vorbekannten Griffe ergibt sich das Problem, daß die Griffe mit relativ zum Griff in deren Mantelfläche angeordneten Funktionstasten einerseits und die Griffe mit unbeweglich daran befindlichen Bedienungstasten andererseits nicht baugleich und demzufolge nicht universell verwendbar sind. Damit ist die Herstellung und insbesondere auch lagermäßige Vorhaltung der unterschiedlichen Griffe relativ kostenaufwendig.

Der Erfindung liegt daher die Aufgabe zugrunde, bei einem Griff mit den gattungsgemäßen Merkmalen den vorgenannten Nachteil zu beseitigen und einen Griff zu schaffen, der leicht herstellbar und in seiner Funktion sicher ist.

Die Lösung dieser Aufgabe ergibt sich aus dem Patentanspruch 1, wobei vorteilhafte Ausgestaltungen und Weiterbildungen der Erfindung sich aus dem Inhalt der Patentansprüche 2-6 ergeben.

Die Erfindung sieht dazu in ihrem Grundgedanken vor, daß der Griff aus einem oberen Griffteil und einem unteren Griffteil gebildet ist und die Öffnung an den einander zugewandten Stirnseiten der Griffteile vorgesehen und durch die Verbindung der Griffteile miteinander ausgebildet ist, so daß als Taste wahlweise eine relativ zum Griff bewegliche Funktionstaste oder alternativ eine zum Griff unbewegliche Bedienungstaste bei baugleichem Griff in der Öffnung der Mantelfläche festlegbar ist.

Nach einem Ausführungsbeispiel der Erfindung ist die Öffnung durch eine Aussparung in der Mantelfläche des oberen Griffteils und ein mit oberen Griffteil verbindbares unteres Griffteil gebildet, wodurch die Funktionstaste beziehungsweise die Bedienungstaste gehaltert ist. Damit kann auf gesonderte Befestigungs- oder Halterungsmittel zur Halterung der Funktionstaste beziehungsweise Bedienungstaste an dem Griff verzichtet werden, da durch das Zusammensetzen von oberem Griffteil und unterem Griffteil die Halterung der betreffenden Taste erfolgt.

Nach einem Ausführungsbeispiel der Erfindung ist vorgesehen, daß die einander zugewandten Stirnflächen der Griffteile außen und innen mit Führungsflächen für eine als Schiebetaste ausgebildete Funktionstaste versehen sind. Hierbei können die Führungsflächen an an den Stirnseiten der Griffteile ausgebildeten und in an der Schiebetaste ausgebildeten Aufnahmeöffnungen eingreifenden Vorsprüngen gebildet sein.

Soweit an dem Griff unbewegliche Bedienungstasten gehaltert werden sollen, sind die Vorsprünge als Festanschlage zur Halterung der daran festgelegten unbeweglichen Bedienungstasten ausgebildet.

Schließlich sind das untere Griffteil und das obere Griffteil über entsprechend zugeordnete Rastgestaltungen miteinander verrastbar, wodurch die Montage des Griffes einschließlich Funktionstaste beziehungsweise Bedienungstaste erleichtert ist.

In der Zeichnung sind Ausführungsbeispiele der Erfindung wiedergegeben, welche nachstehend beschrieben sind. Es zeigen:
- Figur 1: eine sanitäre Wasserarmatur in einer auseinandergezogenen Darstellung,
- Figur 2: einen erfindungsgemäßen Griff mit einer unbeweglichen Bedienungstaste im Längsschnitt,
- Figur 3: den Griff gemäß Figur 2 mit einer als Schiebetaste ausgebildeten Funktionstaste im Längsschnitt sowie
- Figuren 4, 5: die Griffe entsprechend den Figuren 2 und 3 jeweils im Querschnitt nach Linie IV - IV in Figur 2.

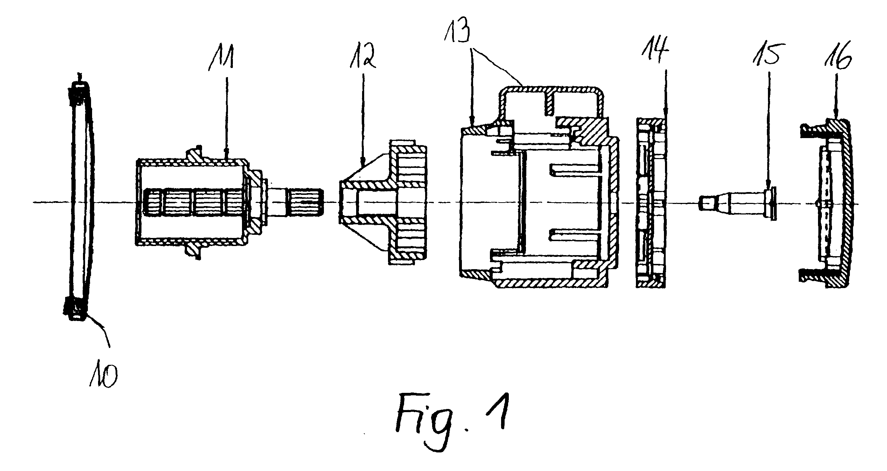

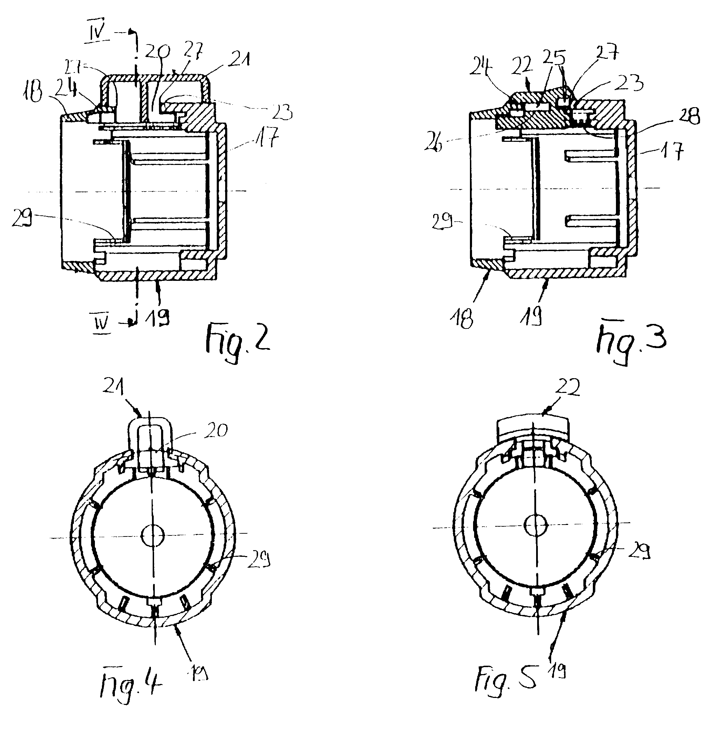

Der Aufbau einer Wasserarmatur mit ihren Hauptbestandteilen ist in Figur 1 dargestellt; dabei ist mit 10 eine Rosette zur Anlage an der Montagefläche für das Ventil bezeichnet, mit 11 eine Verstellspindel und mit 12 ein Kupplungsstück zur Aufnahme eines Griffes 13, der in den Figuren 2 bis 5 im einzelnen dargestellt und bezeichnet ist; auf den Griff 13 ist ein Raststück 14 aufgesetzt, wobei die gesamte Anordnung mittels einer Schraube 15 zusammengehalten wird; als Abschluß ist auf das Raststück 14 eine Abdeckkappe 16 mit unterschiedlichem Design aufsetzbar.

In den Figuren 2 bis 4 ist der Griff 13 in seiner Ausgestaltung dargestellt. Der Griff 13 besteht aus einem oberen Griffteil 17 und einem in Richtung der Wandrosette 10 gesehen unteren Griffteil 18, wobei die Griffteile in der Darstellung der Figuren 2 und 3 über Rastgestaltungen 29 miteinander zu dem einheitlichen Griff 13 verrastet sind.

Das obere Griffteil 17 hat auf seiner die Mantelfläche 19 des Griffes 13 ausbildenden Fläche eine Aussparung 20, in die eine Funktionstaste beziehungsweise eine Bedienungstaste einsetzbar ist. Dabei ist in Figur 2 in die Aussparung 20 eine unbewegliche Bedienungstaste 21 eingesetzt, während die Figur 3 in gleicher Darstellung eine als Schiebetaste 22 ausgebildete Funktionstaste zeigt.

Die Schiebetaste 22 ist mit beiderseits ihrer Verschieberichtung angeordneten Aufnahmeöffnungen 25 auf an den beiden Stirnflächen 27 von oberem Griffteil 17 und unterem Griffteil 18 ausgebildeten Vorsprüngen 23 beziehungsweise 24 geführt, wobei die Schiebetaste 22 über eine Feder 28 an dem oberen Griffteil 17 abgestützt ist, so daß die Schiebetaste 22 an den durch die Vorsprünge 23, 24 beziehungsweise durch die Aufnahmeöffnungen 25 gebildeten Führungsflächen 26 geführt und gehaltert ist. Wie aus Figur 2 ersichtlich, dienen die Vorsprünge 23, 24 bei der Anordnung einer unbeweglichen Bedienungstaste 21 als Festanschläge zur Halterung dieser unbeweglichen Bedienungstaste 21.

Durch die vorstehend beschriebene Ausgestaltung können die beiden Griffteile 17, 18 unabhängig von der späteren Ausrüstung des Griffes 13 jeweils in einheitlicher Ausführung hergestellt und dann mit der unbeweglichen Bedienungstaste beziehungsweise einer Schiebetaste als Funktionstaste konfektioniert und zusammengerastet werden.

## Patentansprüche

1. Griff (13) für sanitäre Wasserarmaturen, wie Thermostatventil, Mischventil, Einzelabsperrventil oder dergleichen, in der Form von Aufputz- oder Unterputzarmaturen, wobei der Griff (13) mit wenigstens einem Stellglied für die Temperatur- beziehungsweise Mengensteuerung versehen ist und zur Aufnahme einer in einer in der äußeren Mantelfläche (19) des Griffes (13) ausgebildeten Öffnung (20) anzuordnenden Taste eingerichtet ist, dadurch gekennzeichnet, daß der Griff (13) aus einem oberen Griffteil (17) und einem unteren Griffteil (18) gebildet ist und die Öffnung (20) an den einander zugewandten Stirnseiten der Griffteile (17, 18) vorgesehen und durch die Verbindung der Griffteile (17, 18) miteinander ausgebildet ist, so daß als Taste wahlweise eine relativ zum Griff (13) bewegliche Funktionstaste (22) oder alternativ eine zum Griff (13) unbewegliche Bedienungstaste (21) bei baugleichem Griff in der Öffnung (20) der Mantelfläche (19) festlegbar ist.

2. Griff nach Anspruch 1, dadurch gekennzeichnet, daß die Öffnung durch eine Aussparung (20) in der Mantelfläche (19) des oberen Griffteils (17) und ein mit dem oberen Griffteil (17) verbindbares unteres Griffteil (18) gebildet ist, wodurch die Funktionstaste (22) beziehungsweise die Bedienungstaste (21) durch das Zusammensetzen von oberem und unterem Griffteil gehaltert ist.

3. Griff nach Anspruch 1 oder 2, dadurch gekennzeichnet, daß die einander zugewandten Stirnflächen (27) der Griffteile (17, 18) außen und innen mit Führungsflächen (26) für eine als Schiebetaste (22) ausgebildete Funktionstaste versehen sind.

4. Griff nach Anspruch 3, dadurch gekennzeichnet, daß die Führungsflächen an an den Stirnseiten (27) der Griffteile (17, 18) ausgebildeten und im an der Schiebetaste (22) ausgebildeten Aufnahmeöffnungen (25) eingreifenden Vorsprüngen (23, 24) gebildet sind.

5. Griff nach einem der Ansprüche 1 bis 4, dadurch gekennzeichnet, daß die Vorsprünge (23, 24) der Griffteile (17, 18) als Festanschläge zur Halterung einer daran festgelegten unbeweglichen Bedienungstaste (21) ausgebildet sind.

6. Griff nach einem der Ansprüche 1 bis 5, dadurch gekennzeichnet, daß das obere Griffteil (17) und das untere Griffteil (18) über Rastgestaltungen (29) miteinander verrastbar sind.

## Claims

1. Handle (13) for sanitary water fittings, such as thermostatic valve, mixing valve, individual stopcock or the like, in the form of surface or recessed fittings, wherein the handle (13) is provided with at least one control element for temperature and/or flow control and is equipped to receive a button to be arranged in an opening (20) formed in the external lateral surface (19) of the handle (13), characterized in that the handle (13) is formed from an upper handle part (17) and a lower handle part (18) and the opening (20) is provided on the end faces which face each other of the handle parts (17, 18) and is formed by the connection of the handle parts (17, 18) to each other so that as button, optionally a function button (22) movable relative to the handle (13) or alternatively a control button (21) immovable relative to the handle (13) can be fixed in the opening (20) of the lateral surface (19) with the same design of handle.

2. Handle according to Claim 1, characterized in that the opening is formed by a recess (20) in the lateral surface (19) of the upper handle part (17) and a lower handle part (18) connectable to the upper handle part (17), whereby the function button (22) and/or the control button (21) is mounted by means of the assembling of upper and lower handle part.

3. Handle according to Claim 1 or 2, characterized in that the end faces (27) facing each other of the handle parts (17, 18) are provided on the outside and inside with guide surfaces (26) for a function button formed as a sliding button (22).

4. Handle according to Claim 3, characterized in that the guide surfaces are formed on projections (23, 24) formed on the end faces (27) of the handle parts (17, 18) and engaging in acceptance openings (25) formed on the sliding button (22).

5. Handle according to one of Claims 1 to 4, characterized in that the projections (23, 24) of the handle parts (17, 18) are formed as firm stops for the mounting of an immovable control button (21) fixed thereto.

6. Handle according to one of Claims 1 to 5, characterized in that the upper handle part (17) and the lower handle part (18) can be latched together by means of latch formations (29).

## Revendications

1. Manette (13) pour robinetterie de salle de bains, comme un mitigeur thermostatique, un mitigeur, un robinet simple ou un élément analogue, sous forme de robinetterie en pose encastrée ou non, la manette (13) étant munie d'au moins un organe de réglage destiné à commander la température et le débit, et étant équipée pour recevoir une touche à disposer dans un orifice (20) réalisé dans la chemise extérieure (19) de la manette (13), caractérisée en ce que la manette (13) est formée par une partie supérieure (17) et une partie inférieure (18) et l'orifice (20) est prévu sur les faces frontales, orientées l'une vers l'autre, des parties (17, 18) de la manette et est réalisé par l'assemblage des parties (17, 18) de la manette l'une avec l'autre, de telle sorte qu'il est possible, avec la même conception de manette, de fixer dans l'orifice (20) de la chemise (19) une touche, qui est conçue soit comme une touche de fonction (22) mobile par rapport à la manette (13), soit comme une touche de commande (21) fixe par rapport à la manette (13).

2. Manette selon la revendication 1, caractérisée en ce que l'orifice est formé par un évidement (20) réalisé dans la chemise (19) de la partie supérieure (17) de la manette et une partie inférieure (18) de la manette à assembler avec la partie supérieure (17) de la manette, la touche de fonction (22) ou la touche de commande (21) étant maintenue par l'assemblage de la partie supérieure et de la partie inférieure de la manette.

3. Manette selon la revendication 1 ou 2, caractérisée en ce que les faces frontales (27) orientées l'une vers l'autre, des parties (17, 18) de la manette sont munies sur l'extérieur et l'intérieur de surfaces de guidage (26) destinées à une touche de fonction conçue comme une touche coulissante (22).

4. Manette selon 1 revendiction 3, caractérisée en ce que les surfaces de guidage sont réalisaes sur les faces frontales (27) des parties (17, 18) de la manette et dans des parties en saillie (23, 24) qui s'engagent dans les cavités (25) réalisées sur la touche coulissante (22).

5. Manette selon l'une quelconque des revendications 1 à 4, caractérisée en ce que les parties en saillie (23, 24) des parties (17, 18) de la manette sont conçues en forme de butées fixes destinées à maintenir une touche de commande (21) immobile fixée contre lesdites butées.

6. Manette selon l'uen quelconque des revendications 1 à 5, caractérisée en ce que la partie supérieure (17) de la manette et la partie inférieure (18) de la manette peuvent s'encliqueter l'une dans l'autre par l'intermédiaire d'éléments d'encliquetage (29).
